# FASCICULE DE BREVET EUROPEEN

(11) **EP 1 951 434 B1**
(45) Date de publication et mention de la délivrance du brevet: **14.05.2014**
(21) Numéro de dépôt: 06831296.6
(22) Date de dépôt: 25.10.2006
(51) Int. Cl.: B04C 5/103

(54) **PROCEDE ET DISPOSITIF DE SEPARATION DE LIQUIDE POLYPHASIQUE**
VERFAHREN UND VORICHTUNG ZUR TRENNUNG EINER MEHRPHASENFLÜSSIGKEIT
MULTIPHASE LIQUID SEPARATING METHOD AND DEVICE

(30) Priorité: 09.11.2005 FR 0511373
(43) Date de publication de la demande: 06.08.2008
(73) Titulaire: SAIPEM S.A., 78180 Montigny-le-Bretonneux (FR)
(72) Inventeur: CHANTREL, Paul, F-38113 Veurey Voroize (FR); BONNISSEL, Marc, F-78180 Montigny Le Bretonneux (FR)
(74) Mandataire: Domange, Maxime
(86) Numéro de dépôt international: PCT/FR2006/051104
(87) Numéro de publication internationale: WO 2007/054651

(56) Documents cités:
- EP-A- 0 473 566
- WO-A-01/87453
- DE-A1- 2 046 642
- GB-A- 2 036 606
- US-A- 3 764 008

## Description

La présente invention a pour objet un séparateur liquide/liquide de type cyclone ainsi qu'un procédé et une installation de séparation de liquide polyphasique, notamment d'huile et d'eau contenus dans du pétrole brut.

Le secteur technique de l'invention est plus particulièrement le domaine de la production pétrolière, et plus particulièrement le domaine des champs de pétrole en mer par grande profondeur.

La production de pétrole en mer profonde est réalisée en général à partir d'un support flottant ancré à proximité des puits de pétrole situés au niveau du fond de la mer, c'est-à-dire à des profondeurs variables de 1000 à 2500m, voire plus. Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les têtes de puits sont en général reliées audit FPSO par des conduites sous-marines soit de type SCR, c'est-à-dire conduites suspendues en configuration de chaînette, soit de type tour hybride comprenant :
- un riser vertical dont l'extrémité inférieure est ancrée au fond de la mer et relié à une dite conduite reposant au fond de la mer, et l'extrémité supérieure est tendue par un flotteur immergé en subsurface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

L'intégralité de la production de pétrole brut est ainsi en général remontée à bord du FPSO pur y être traitée en vue de séparer le pétrole proprement dit, de l'eau, du gaz, et d'éventuels composants sablonneux. Le pétrole, une fois séparé, est ainsi stocké à bord, le gaz est lavé, puis envoyé vers les turbines à gaz pour la production de l'électricité et de la chaleur nécessaire à bord, puis le surplus est réinjecté dans le réservoir du champ pétrolier de manière à remettre en pression ledit réservoir. L'eau, après avoir été libérée du sable en suspension, est enfin soit rejetée à la mer après extraction poussée de toute particule d'huile, soit réinjectée elle aussi dans le réservoir, un complément d'eau de mer prélevé en sub-surface, venant en général en complément, pour atteindre le débit nécessaire d'injection d'eau dans le réservoir. Le sable extrait, qui ne représente que des quantités minimes, est finalement lavé puis rejeté en mer.

Au début de l'exploitation d'un champ, l'eau ne représente qu'un pourcentage faible du pétrole brut, mais après quelques années, voire quelques décennies, l'eau produite peut représenter 80 à 95% de la production, et les installations de séparation, de traitement et de réinjection de l'eau doivent être dimensionnées en conséquence. Ainsi, on est amené à remonter en surface, des quantités très importantes d'eau que l'on devra renvoyer vers le fond de la mer pour les réinjecter dans la nappe de pétrole du réservoir.

De nombreux systèmes séparateurs ont été développés depuis des décennies pour séparer les liquides, des gaz, et des solides et en particulier le pétrole (huile), de l'eau, du gaz, et des particules de sable.

La méthode couramment employée sur les installations fixes à terre est l'utilisation de réservoirs de très grands volumes, en général de forme cylindrique allongée, le pétrole brut entrant à une extrémité et cheminant le long dudit réservoir pendant une durée de l'ordre de 5 mn durant lesquelles les diverses phases se séparent naturellement par gravité pour atteindre la seconde extrémité où le gaz est récupéré en partie haute du réservoir, l'eau et le sable en partie basse, et le pétrole (huile) en partie intermédiaire. Il existe une très grande variété de séparateurs de ce type qui intègrent en général des dispositifs complémentaires internes, tels des écrans horizontaux, verticaux ou obliques, dont l'objet est de faciliter la séparation des phases et éviter qu'ils ne se re-mélangent à une étape ultérieure.

Contrairement aux séparateurs horizontaux décrits précédemment qui utilisent la force de gravitation pour effectuer ladite séparation, les séparateurs de type cyclone utilisent la force centrifuge et sont souvent utilisés en raison de leur compacité, mais leur mise en oeuvre reste très délicate en raison de leur point de fonctionnement qui reste assez précis et n'autorise pas de ce fait de grandes variations dans les rapports eau/huile et liquide/solide (on entend ici par « point de fonctionnement » une séparation stable des volumes de phases de densité différentes à l'intérieur du cyclone). Dans ce type de séparateur, le fluide y reste un temps très court, de l'ordre de 0.5 secondes et, de ce fait, un système de contrôle et commande très sophistiqué doit être mis en oeuvre pour ajuster l'ensemble des servo-valves pour que les paramètres du système puissent être stabilisés autour du point de fonctionnement optimum. Il existe des séparateurs cyclones de type passif, dans lesquels l'énergie de séparation est prélevée directement sur le fluide en créant une perte de charge, en général de quelques bars. D'autres variantes basées sur un apport d'énergie externe, utilisent un moteur, en général électrique entraînant un dispositif, en général de type cloche, pour créer ladite force centrifuge au sein du fluide à séparer, tels les systèmes Dynaclean de NEYRTEC (France)

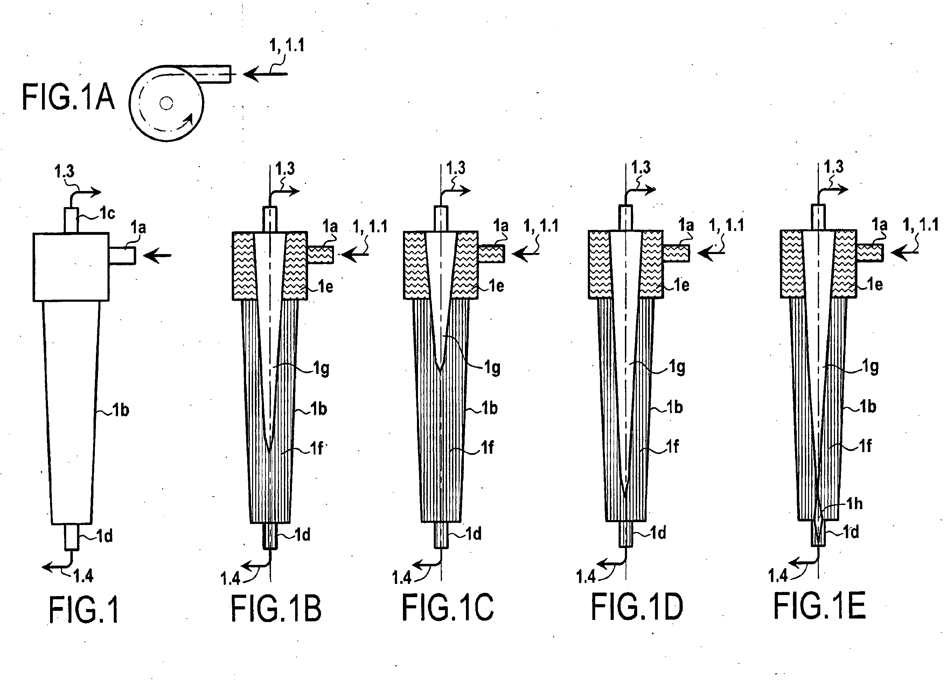

On connaît les brevets WO 97/28903, EP 259104 et WO 97/15368 qui décrivent des séparateurs liquide/liquide de type cyclone comprenant une entrée tangentielle du fluide à séparer dans une première portion cylindrique, laquelle portion cylindrique est prolongée d'une portion inférieure conique, à faible conicité, du type de ceux décrits ci-après en référence aux figures 1 et 1A-1E, débouchant sur un orifice de sortie axiale de la phase lourde (eau), la phase légère (huile) étant évacuée par un orifice de sortie axiale à l'extrémité supérieure de ladite première portion cylindrique.

Comme explicité ci-après, la force centrifuge du fluide envoyé à l'extrémité supérieure du cyclone par une entrée tangentielle, induit l'établissement d'un premier volume central de la phase légère (huile) entouré d'un volume périphérique de la phase lourde (eau).

Lorsque le débit du fluide entrant varie, et surtout lorsque la proportion respective d'eau et d'huile dans le fluide à traiter varie, il est nécessaire de régler les paramètres de fonctionnement du cyclone, pour éviter qu'il ne se produise des décrochages de poches d'huile entraînées avec l'eau, notamment.

Un but de la présente invention est de fournir un dispositif de séparation liquide/liquide de type cyclone amélioré, permettant de stabiliser son fonctionnement et d'éviter des perturbations affectant la qualité de la séparation en cas de variation de débit et surtout de variation de la proportion eau / huile dans le pétrole brut à traiter.

Plus généralement, un but de la présente invention est de fournir des dispositifs d'installation et procédés de séparation eau / huile améliorés pour traiter le pétrole brut, et plus particulièrement à grande profondeur.

Pour ce faire, la présente invention fournit un cyclone de séparation liquide/liquide, de deux phases liquides de densités différentes d'un fluide notamment les phases aqueuse et huileuse d'un pétrole brut comprenant :
- une chambre de séparation dont la paroi forme une surface de révolution s'étendant entre
   - au moins un orifice d'admission tangentielle du fluid à séparer et un orifice de sortie axiale supérieure de la phase liquide de plus basse densité à l'extrémité supérieure de ladite chambre, et
   - un orifice de sortie inférieure de la phase liquide de plus haute densité.

Selon l'invention, ladite chambre de séparation comprend un même corps cylindrique s'étendant au moins entre lesdits orifices d'admission et un plateau de même axe XX' que ledit corps cylindrique, de diamètre inférieur à celui dudit corps cylindrique et positionné au dessus dudit orifice de sortie inférieure, de sorte que 2 volumes se créent sous l'effet du fluide à séparer entrant par le(s)dit(s) orifice(s) d'admission tangentielle, comprenant un volume central de la phase liquide de plus basse densité, notamment phase huileuse, sous forme d'une colonne centrale sensiblement cylindrique, supportée par ledit plateau, et un volume périphérique annulaire de la phase liquide de plus haute densité entourant ladite colonne centrale, permettant l'évacuation de la phase liquide de plus basse densité par ledit orifice de sortie axiale supérieure et l'évacuation de ladite phase liquide de plus haute densité par ledit orifice de sortie inférieure.

On comprend que les deux dits volumes coaxiaux se créent par centrifugation sous l'effet de la force centrifuge du fluide entrant tangentiellement par lesdits orifices d'admission.

Avantageusement, l'interface entre les 2 dits volumes peut se déplacer radialement sur ledit plateau lorsque la proportion relative des deux phases liquides entrant dans la composition du fluide à séparer varie, sans affecter la séparation des deux dites phases liquides.

Comme explicité plus avant dans la description qui suivra, le plateau à la base de la chambre de séparation du cyclone selon l'invention, sert de support aux deux volumes coaxiaux d'huile et d'eau respectivement cylindriques et annulaires (ou tubulaires) ainsi créés par la force centrifuge du fluide entrant tangentiellement à l'extrémité supérieure, et autorise une variation de la position radiale de l'interface huile / eau, laquelle interface peut en effet se déplacer le long du diamètre dudit plateau, sans affecter la séparation des deux volumes coaxiaux d'huile et d'eau, lorsque la proportion relative des teneurs en huile et eau du pétrole brut traité varie.

Le cyclone selon l'invention présente en outre l'avantage de permettre un fonctionnement stabilisé de la séparation, tout en présentant une taille relativement réduite par rapport aux cyclones conventionnels.

Dans un mode de réalisation particulier, le diamètre dudit plateau est de 1/2 à 98/100 de celui dudit corps cylindrique, de préférence au moins 3/4.

Dans une première variante, ladite chambre de séparation est constituée d'un même corps cylindrique s'étendant entre ledit orifice d'admission et ledit orifice de sortie inférieure, ledit orifice de sortie inférieure étant un orifice de sortie tangentielle, et ledit plateau est positionné à l'extrémité inférieure dudit corps cylindrique juste en amont dudit orifice inférieur de sortie tangentielle.

Dans une seconde variante, la portion inférieure de ladite chambre située entre ledit plateau et ledit orifices inférieur de sortie est de forme conique de même axe XX' que ledit corps cylindrique et ledit orifice inférieur est un orifice de sortie axiale s'étendant dans la direction axiale XX' dudit corps cylindrique.

Cette seconde variante de réalisation présente l'avantage d'augmenter la perte de charge de l'eau arrivant dans ledit orifice de sortie axiale, ceci pour rendre la pression de l'eau évacuée sensiblement identique à la pression du liquide de la phase huileuse sortant dudit orifice supérieur de sortie axiale, en réglant le diamètre respectif des dits orifices supérieur et inférieur axiaux, ledit orifice inférieur de sortie de la phase liquide lourde ayant un diamètre supérieur au dit orifice supérieur de sortie de la phase liquide légère.

Cet équilibre des pressions de sortie des phases huileuse et aqueuse, permet de stabiliser le fonctionnement d'une installation et d'un procédé de séparation, comme il sera explicité ci-après.

De préférence, ledit cyclone comprend des moyens de perte de charge au niveau dudit orifice de sortie inférieur pour réduire la pression de la phase lourde aqueuse en sortie dudit séparateur, de préférence créant une perte de charge proportionnelle à l'accélération du fluide, tels qu'une plaque perforée ou un diaphragme, en aval dudit orifice de sortie inférieur dudit cyclone de séparation liquide/liquide.

Cette caractéristique permet d'autoréguler la stabilisation du fonctionnement d'une installation de séparation, comprenant un cyclone selon l'invention par égalisation des pressions d'huile et d'eau sortant du cyclone dans le cadre d'un procédé selon l'invention, impliquant la mise en oeuvre de ce type d'installation comme explicité ci-après.

La présente invention fournit également une installation de séparation d'au moins deux phases liquides de densités différentes d'un fluide contenant aussi du gaz, de préférence au moins l'huile et l'eau d'un pétrole brut comprenant de l'huile, de l'eau, des particules de sable et du gaz comprenant
a) au moins un séparateur liquide/gaz de préférence du type cyclone dans au moins une première enceinte, et
b) au moins un séparateur liquide/liquide du type cyclone selon l'invention, relié au dit séparateur liquide/gaz par une première conduite d'amenée de pétrole dégazé, et
c) au moins une enceinte principale, ladite enceinte principale étant reliée
   - au du gaz étant équipée d'une vanne apte à contrôler la pression du gaz, ladite vanne étant commandée de préférence en fonction dit séparateur liquide /gaz par une conduite d'amenée de gaz le cas échéant depuis la partie haute de ladite première enceinte jusqu'à la partie haute de ladite enceinte principale, ladite conduite d'amenée du niveau de pétrole dans ladite première enceinte, et
   - au dit séparateur liquide/liquide de type cyclone par deux conduites s'étendant depuis les orifices supérieur et inférieur de sortie des phases huileuse et aqueuse respectivement jusqu'à déboucher dans deux zones distinctes de ladite enceinte principale,
   - ladite enceinte principale comprenant en outre des conduites d'évacuation de l'eau et l'huile séparément.

Comme mentionné ci-dessus, l'installation selon l'invention comprend avantageusement des moyens de perte de charge proportionnelle à l'accélération du fluide, de préférence une plaque perforée ou un diaphragme, en aval dudit orifice de sortie inférieur dudit cyclone de séparation liquide/liquide.

Plus particulièrement, dans une installation selon la présente invention, ladite enceinte principale comprend respectivement :
- dans une zone d'accumulation de l'huile, un dispositif de contrôle de l'évacuation de l'huile et/ou dudit gaz dans une même conduite, et
- dans une zone d'accumulation de l'eau, un dispositif de contrôle de l'évacuation de l'eau séparée des dites particules solides dans une conduite distincte en partie basse de ladite enceinte principale, et un orifice d'évacuation des dites particules solides au fond de ladite enceinte principale.

Selon des caractéristiques plus particulières et avantageuses :
- ledit dispositif de contrôle de l'évacuation de l'eau séparée des dites particules solides est constitué d'une vanne automatique commandée par un flotteur apte à obturer l'évacuation de l'eau lorsque le niveau de l'eau descend en dessous d'un niveau donné et apte à autoriser l'évacuation de l'eau lorsque le niveau monte au dessus dudit niveau,
- ledit dispositif de contrôle de l'évacuation du pétrole et/ou dudit gaz dans une même conduite est constitué par un collecteur cylindrique relié à ladite conduite d'évacuation du pétrole et/ou du gaz, ledit collecteur comprenant une paroi cylindrique perforée à différents niveaux sur la hauteur dudit collecteur apte à permettre l'évacuation du gaz par les perforations situées au dessus du niveau du pétrole et l'évacuation du pétrole par les perforations situées au dessous du niveau du pétrole.

Dans un premier mode de réalisation particulier, lesdites deux zones distinctes de ladite enceinte principale sont séparées par une cloison interne apte à ne laisser communiquer entre les deux zones que ledit gaz.

Dans un autre mode de réalisation particulier, ladite enceinte principale ne comprend pas de cloison interne et lesdites phases huileuse et aqueuse récupérées séparément en sortie des dits séparateurs liquide/liquide 2 sont envoyées dans deux dites zones distinctes de ladite enceinte principale 5 séparées par simple gravité naturelle créée par la différence de densité entre eau et huile.

Avantageusement, une installation selon l'invention comprend une série de dits séparateurs liquide/liquide du type cyclone montés en parallèle.

De préférence encore, le ou lesdits séparateurs liquide/liquide sont placés à l'intérieur de ladite enceinte principale, les orifices de sortie des phases huileuse et aqueuse en sortie du ou des dits séparateurs liquide/liquide de type cyclone communiquant respectivement avec lesdites zones distinctes d'accumulation du pétrole et de l'eau dans ladite enceinte principale.

Dans un mode de réalisation particulier, ladite enceinte principale est installée à terre ou à bord d'un support flottant, et est de préférence de forme cylindrique à fond bombé.

Dans un autre mode de réalisation, ladite enceinte principale est de forme sphérique et est installée au fond de la mer.

De préférence, lesdites enceintes principales et lesdits séparateurs liquide/liquide du type cyclone sont répartis symétriquement.

L'installation selon l'invention permet de réaliser un procédé de séparation d'au moins l'huile et l'eau d'un pétrole brut comprenant aussi du gaz et le cas échéant, des particules de sable selon lequel on réalise les étapes successives suivantes dans lesquelles :
1) On réalise le dégazage au moins partiel dudit pétrole brut à l'aide d'un dit séparateur liquide/gaz de préférence du type cyclone dans au moins une première enceinte, et
2) On réalise la séparation de l'eau contenue dans ledit pétrole brut dégazé obtenu à l'étape 1), pour obtenir une phase d'huile et une phase aqueuse contenant lesdites particules solides, à l'aide d'au moins un dit séparateur liquide/liquide du type cyclone,
3) On réalise une étape de stabilisation et régulation du fonctionnement du ou des dits séparateurs liquide/liquide de l'étape 2) en envoyant les flux de gaz, phase huileuse et phase aqueuse issus des dits séparateurs des étapes 1) et 2) dans une même dite enceinte principale sensiblement à la même pression pour obtenir un niveau contrôlé d'huile et d'eau dans ladite enceinte principale,
   - ledit flux de gaz étant récupéré en partie haute de ladite première enceinte et envoyé sous pression contrôlée par une vanne, en partie haute de ladite enceinte principale,et
   - la pression de ladite phase aqueuse récupérée en sortie dudit séparateur liquide/liquide étant réduite par des dits moyens de perte de charge pour obtenir une pression sensiblement identique à celle de ladite phase huileuse en sortie dudit séparateur liquide/liquide de type cyclone de l'étape 2).

Plus particulièrement, les niveaux des phases liquides d'huile et eau dans les deux dites zones distinctes de ladite enceinte principale sont régulés par lesdits dispositif de contrôle de l'évacuation de l'huile et/ou dudit gaz dans une même conduite, et dispositif de contrôle de l'évacuation de l'eau.

Plus particulièrement encore, la commande de ladite vanne pour contrôler la pression du gaz en sortie de ladite première enceinte, se fait en fonction du niveau de pétrole dans ladite première enceinte lequel niveau est maintenu de préférence sensiblement constant.

D'autres caractéristiques et avantages de la présente invention apparaîtront à la lumière de la description détaillée des modes de réalisation qui va suivre, en référence aux figures 1 à 7 :
- la figure 1 est une vue de côté d'un cyclone conventionnel de séparation liquide / liquide,
- la figure 1A est une vue de dessus relative à la figure 1,
- les figures 1A, 1B, 1C et 1D sont des vues de côté de la veine fluide au sein d'un cyclone conventionnel respectivement en configuration moyenne (figure 1B), minimum (figure 1C), maximum (figure 1D) et maximum avec décochement d'une bulle de pétrole (figure 1E),
- la figure 2 est une vue de face en arraché d'un cyclone de séparation gaz liquide/liquide selon l'invention,
- les figures 2A et 2B sont des vues respectivement de dessus et de dessous relatives à la figure 2,
- les figures 2C, 2D et 2E sont des vues de côté de la veine fluide au sein d'un cyclone selon l'invention respectivement en configuration moyenne (figure 2C), minimum (figure 2D) et maximum (figure 2E),
- la figure 3 est une coupe en vue de côté d'une variante du cyclone selon l'invention présentant un fond à forte conicité et un orifice axial d'évacuation de l'eau,
- la figure 4 est une vue de côté d'une installation de séparation selon l'invention comprenant une séparation primaire gaz / liquide, et un ensemble de cyclones selon l'invention relié à une enceinte principale sphérique de rejet et décantation équipé d'une cloison transversale verticale,
- la figure 4A est une vue de détail relatif à la figure 4, d'un dispositif de contrôle de l'évacuation du pétrole (huile) et gaz par soutirage et de mélange des phases gaz / pétrole en vue de leur exportation à grande distance,
- la figure 4B est une section dudit dispositif de contrôle relatif à la figure 4A,
- la figure 5 est une vue de côté d'une installation de séparation selon l'invention similaire à celle de la figure 4, dans laquelle l'eau et le pétrole sont séparés naturellement par différence de densité, l'enceinte principale de rejet et décantation étant de ce fait dépourvue de cloison transversale verticale,
- la figure 6 est une coupe en vue de côté d'une installation de séparation selon l'invention, dans laquelle l'ensemble des cyclones est installé à l'intérieur de l'enceinte principale de rejet et décantation,
- la figure 6A est une vue de dessus d'un cyclone présentant trois orifices d'admission du pétrole brut à traiter, uniformément répartis sur la périphérie dudit cyclone,
- la figure 7 est une vue de dessus d'une installation comprenant un ensemble de quatre dispositifs selon la figure 6, assemblés de manière symétrique autour d'une canalisation principale d'entrée du pétrole à traiter.

Dans la figure 1 on a représenté un cyclone conventionnel de séparation liquide / gaz, solide / gaz ou liquide / liquide présentant une entrée tangentielle 1a du fluid à séparer 1.1, un corps cylindro-conique 1b, une sortie axiale supérieure 1c et une sortie axiale inférieure 1d. Le fluide 1.1 entrant tangentiellement en 1a sous forte pression et fort débit se met à tourbillonne dans la partie supérieure 1e et la force centrifuge créée au sein même du fluide crée une accélération pouvant atteindre 1000g, ce qui a pour effet de plaquer les particules les plus lourdes près de la surface cylindro-conique de la paroi, les particules les plus légères restant près du centre, comme représenté sur la figure 1B correspondant à un point de fonctionnement moyen du cyclone. Dans le cas d'une séparation pétrole / eau, on distingue ainsi sur cette même figure 1B, une zone supérieure fortement tourbillonnaire 1e dans laquelle eau et pétrole commencent à se séparer dans la partie supérieure cylindrique, puis en allant vers le bas, dans la partie conique du cyclone, l'eau se trouve dans la zone périphérique 1f et les particules de pétrole coalescent entre elles et de par leur plus faible densité, se dirigent vers l'axe du cyclone et s'agrègent dans un cône central 1g constitué quasi intégralement de pétrole brut débarrassé de son eau. De par le gradient de pression existant au sein du cyclone entre la paroi et l'axe dudit cyclone, et de par la forme conique de la paroi évasée vers le haut, l'eau 1.4 (phase lourde) s'évacue naturellement vers le bas et le pétrole 1.3 (phase légère) vers l'orifice supérieur. Le dispositif est contrôlé de manière continue au moyen de vannes asservies pilotées en temps réel, non seulement au niveau de l'entrée 1a, mais aussi au niveau des orifices de sortie 1c, 1d. En cas de variations brutales des paramètres de la veine fluide entrante (variations de débit, variation du rapport eau / huile, ...) le système de contrôle et commande doit être suffisamment rapide et précis pour reconfigurer l'état des dites vannes de contrôle commande, pour que le système continue à fournir une bonne séparation des fluides. Ainsi, la valeur moyenne de la dimension du cône d'huile 1g représenté sur la figure 1B peut se réduire comme représenté sur la figure 1C lorsque le pourcentage d'eau dans le brut augmente, ou si la vanne asservie relative à la sortie 1d est trop fermée. Il peut aussi s'allonger vers le bas comme représenté figure 1D si ledit pourcentage d'eau diminue, ou si la vanne asservie relative à la sortie 1d est trop ouverte. Dans des cas extrêmes représentés figure 1E, correspondant en général à des phases transitoires de courte durée, ou à une incapacité du système à s'auto-stabiliser, des poches d'huile 1h peuvent se décrocher du cône d'huile 1g à sa base et être entraînées dans le flux d'eau sortant par l'orifice 1d, perturbant ainsi radicalement la qualité de la séparation.

Ce type de cyclone présente en général un diamètre interne au niveau de la partie cylindrique de 50 à 75mm, et une hauteur d'environ 2m à 2.5m. La partie conique permet au fluide parcourant le cyclone vers le bas, de conserver un fort niveau d'accélération tout le long de son parcours, malgré la perte d'énergie créée par les divers frottements contre les parois du cyclone.

Ces cyclones n'ont qu'un débit unitaire assez faible et sont en général installés en parallèles au sein d'une enceinte. Ils ont été décrits en position verticale, mais l'effet séparateur étant basé sur le principe de la force centrifuge, ils peuvent en fait être installés en n'importe quelle position et sont souvent en position horizontale.

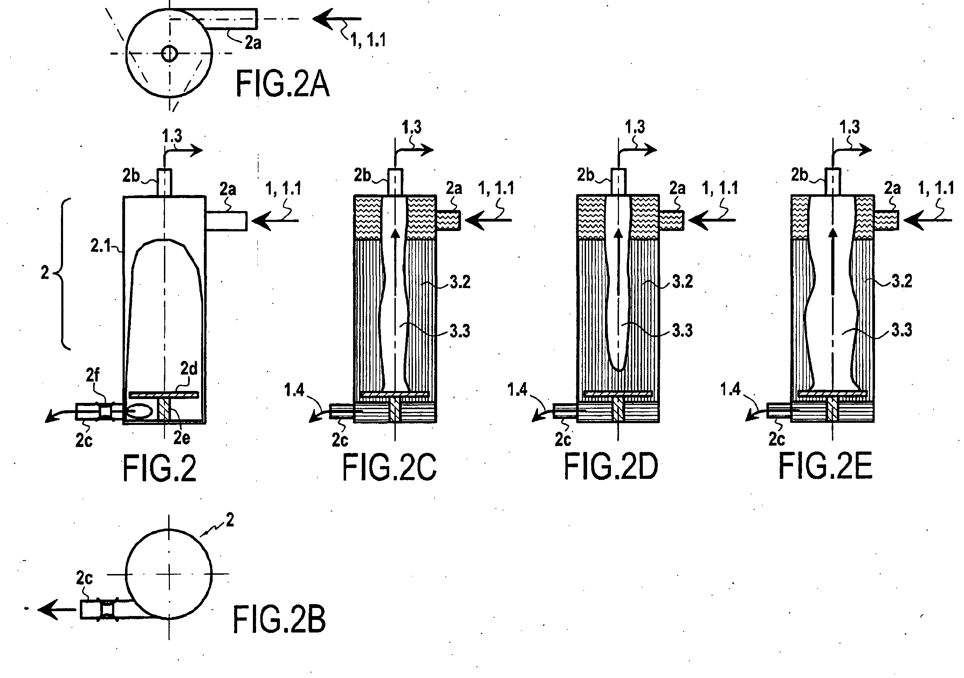

La figure 2 représente en vue de côté en arraché, un cyclone selon l'invention constitué d'un corps cylindrique 2, qui présente dans sa partie supérieure au moins un orifice d'admission tangentiel 2a audit corps cylindrique, ainsi qu'un orifice tangentiel de sortie 2c situé en partie basse dudit corps cylindrique. Un plateau 2d, de préférence circulaire, de diamètre légèrement inférieur au diamètre intérieur dudit corps cylindrique est solidarisé audit corps cylindrique, de préférence au niveau du fond de ce dernier, par l'intermédiaire d'un support axial 2e.

Sur la figure 2C on a représenté en coupe en vue de côté, la veine fluide au sein du cyclone selon l'invention. Le pétrole brut 1 éventuellement dégazé 1.1 entre tangentiellement par l'orifice d'entrée 2a et tourbillonne à grande vitesse dans la zone supérieure 3₁ sous l'effet de la force centrifuge où l'eau commence à se séparer du pétrole (huile). Dans la partie médiane du cyclone, l'eau est centrifugée vers l'extérieur en 3.2 et le pétrole (huile) se rassemble au centre pour former une colonne 3.3 sensiblement cylindrique qui est évacuée par l'orifice supérieur 2b. En partie basse, ladite colonne de pétrole vient buter contre le plateau 2d et est représentée en configuration moyenne sur ladite figure 2C. Pour la clarté des explications, la colonne de pétrole traitée est présentée sur les figures 2C-2E selon une forme sensiblement cylindrique d'axe ZZ avec une génératrice sinueuse sur la hauteur, alors qu'en réalité, les effets de la force centrifuge considérable s'exerçant sur l'interface eau / huile rendent cet interface quasiment cylindrique et à génératrice quasi rectiligne, dès lors que le débit entrant est distribué de manière symétrique sur au moins deux entrées 2a positionnées de manière symétrique par rapport à l'axe dudit cyclone.

Sur la figure 2D ladite colonne 3.2, en raison d'un fort pourcentage d'eau dans le pétrole brut, se détache dudit plateau 2d, alors que sur la figure 2E, correspondant à un faible pourcentage d'eau dans le pétrole brut, ladite colonne augmente de diamètre, sans pour autant atteindre les bords dudit plateau 2d, ce qui aurait pour effet de laisser s'échapper par l'orifice inférieur 2c, du pétrole en même temps que l'eau évacuée. Ainsi, le plateau 2d associé à un corps de cyclone dont le diamètre intérieur est légèrement plus grand, crée une butée basse pour la colonne de pétrole, ladite colonne pouvant alors varier de diamètre dans des proportions considérables, et donc la proportion huile / eau aussi, sans que le pétrole soit entraîné en même temps que l'eau. Ainsi, contrairement à l'art antérieur qui nécessite un flux entrant de pétrole brut présentant une composition %eau / %huile dans une fourchette étroite, de manière à ce que le système de contrôle et commande agissant sur les vannes pilotées puisse maintenir l'ensemble dans un état stable, le cyclone selon l'invention présente une plage de fonctionnement 5 fois, voire 10 fois plus étendue, ce qui simplifie radicalement le système de contrôle et commande des vannes et le réduit même au minimum, comme il sera expliqué plus avant ci-après.

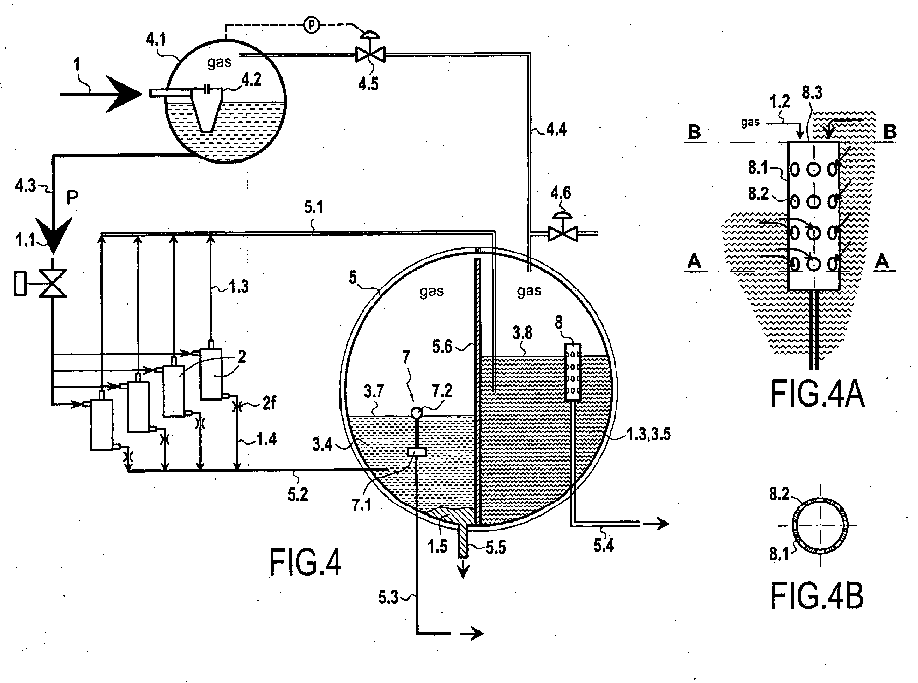

Sur la figure 4 on a représenté en coupe en vue de côté une première version d'une installation selon l'invention intégrant une série de cyclones 2 selon l'invention montés en parallèle et alimentés par un flux de pétrole brut 4 entrant dans un premier étage de séparation liquide / gaz constitué, de manière connue, d'une première enceinte résistant à la pression 4.1 et d'un cyclone conventionnel 4.2, le pétrole partiellement dégazé s'échappant en partie basse de ladite première enceinte dans une conduite 4.3, pour être dirigé vers les cyclones 2 installés en parallèle. Le gaz est récupéré en partie haute de ladite première enceinte 4.1, puis envoyée par une conduite 4.4 vers une enceinte principale 5 de rejet et décantation assurant une stabilisation des flux de pétrole, gaz et eau.

Cette enceinte principale 5 est constituée d'un réservoir résistant à la pression :
- L'enceinte principale 5 est alimentée :
   - par le haut, en pétrole partiellement dégazé, par une conduite 5.1 en provenance des orifices supérieurs de sortie axiale 2b de l'ensemble des cyclones 2 montés en parallèle,
   - par le bas en eau en provenance des orifices inférieurs tangentiels 2c de l'ensemble des cyclones 2 montés en parallèle,
   - en gaz par la conduite 4.4 en provenance de l'étage de séparation primaire fluide / gaz 4.1-4.2, la pression dudit gaz étant contrôlée en temps réel par la vanne asservie 4.5, en maintenant un niveau sensiblement constant du pétrole dégazé au sein de la première enceinte 4.1, et
- Cette enceinte principale 5 comporte :
   - une conduite de sortie de l'eau 5.3 située en partie basse,
   - une conduite de sortie 5.4 commune à l'huile et au gaz,
   - un orifice d'évacuation du sable 5.5 s'accumulant au fond de ladite enceinte principale 5 dans la zone d'accumulation 3.4 de l'eau 1.4,
   - une cloison interne 5.6 confinant de manière étanche le pétrole sur la droite 3.5 et l'eau sur la gauche 3.4, mais ouverte en partie supérieure pour laisser passer le gaz entre la cloison et la paroi de l'enceinte principale 5,
   - un dispositif de contrôle 7 de l'évacuation de l'eau par la conduite 5.3,
   - un dispositif de contrôle 8 de l'évacuation du gaz et du pétrole par la conduite 5.4.

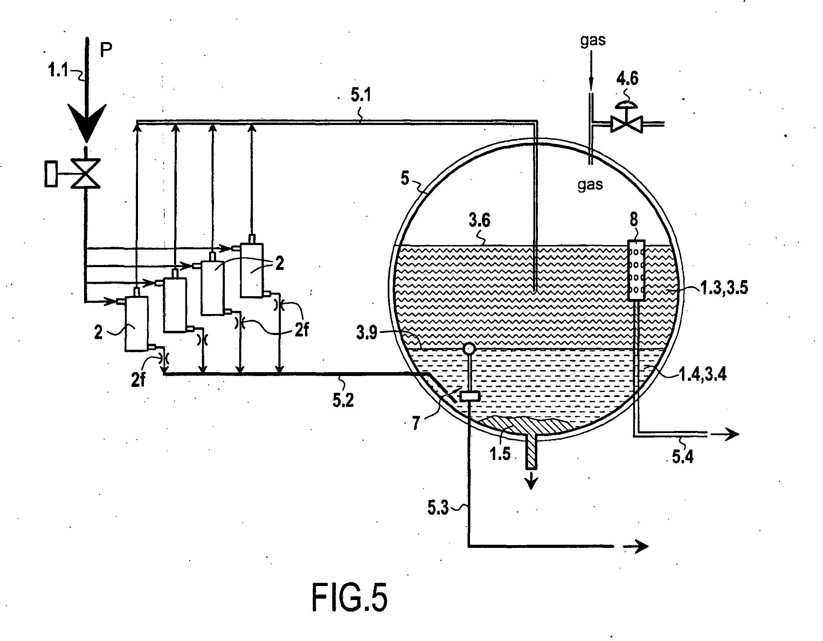

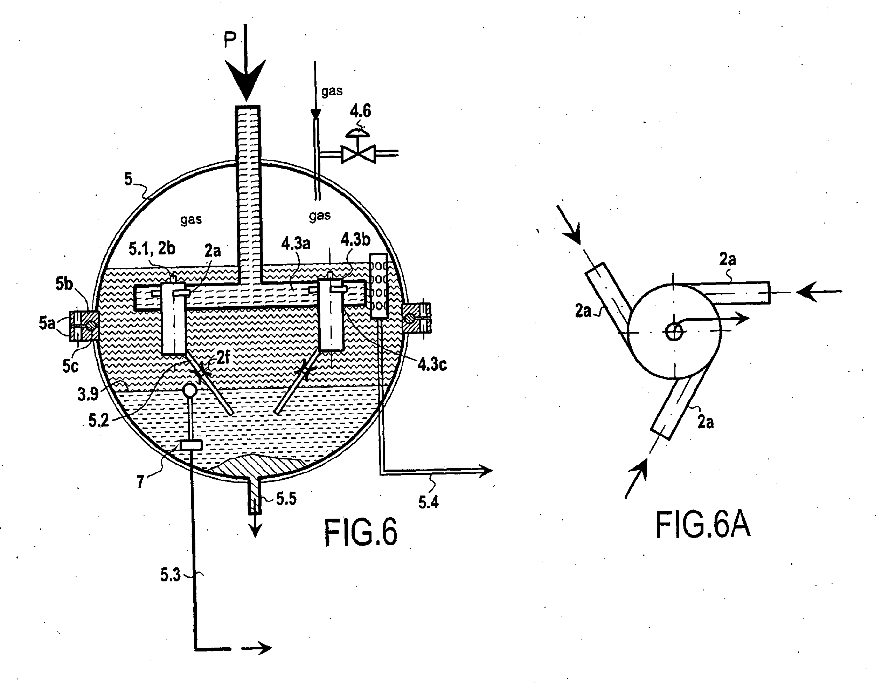

Le dispositif de contrôle de l'évacuation d'eau 7 est constitué d'une vanne automatique 7.1 commandée par un flotteur 7.2 obturant la sortie lorsque le niveau baisse. Sur la figure 4, la vanne 7.1 est représentée en position fermée et dès que le niveau d'eau monte dans l'enceinte principale 5, le flotteur 7.2 ouvre la vanne 7.1 autorisant ainsi l'évacuation de l'eau par la pression du gaz. Sur les figures 5 et 6, le flotteur 7.2 est positionné à l'interface 3.9 eau / huile.

Le dispositif de contrôle de l'évacuation du pétrole et du gaz est constitué d'un collecteur 8, à paroi cylindrique perforée de préférence circulaire et de préférence encore de section constante sur la hauteur, reliée de manière étanche à la conduite d'évacuation 5.4.

Le fonctionnement du dispositif 8 est explicité sur la figure 4A :
- le corps du collecteur 8.1 est percé d'une multitude de trous calibrés 8.2, de préférence identiques sur la hauteur, et répartis de préférence de manière uniforme sur la périphérie, comme représenté sur la figure 4B,
- lorsque le niveau de pétrole dans l'enceinte principale est en dessous de la limite supérieure du collecteur , c'est-à-dire en dessous du plan BB, comme représenté sur la partie gauche de la figure, le pétrole passe à travers les orifices 8.2 et est évacué par la conduite 5.4. Le gaz, dont la pression augmente à l'intérieur de ladite enceinte, est lui aussi évacué par la même voie 5.4, ce qui reconstitue un mélange pétrole / gaz, qui est initialement bi-phasique, mais peut, après un certain parcours dans les installations, ou par recompression du fluide, devenir monophasique par dissolution du gaz dans le pétrole,
- lorsque le niveau de pétrole dans l'enceinte principale est en dessous des trous les plus bas, en dessous du plan AA, le pétrole n'est plus évacué, et seul le gaz est évacué par la conduite 5.4,
- lorsque le niveau de pétrole dans l'enceinte principale est au dessus du plan BB, le gaz n'est plus évacué et seul le pétrole est évacué, non seulement par les trous latéraux 8.2, mais aussi par l'orifice supérieur 8.3 du collecteur, comme indiqué sur la partie droite de la figure.

On peut être amené à prélever une partie du gaz pour le réinjecter directement dans la nappe, ou encore pour l'expédier directement vers une autre destination. La vanne pilotée 4.6 permet ainsi de contrôler la quantité de gaz prélevé, la totalité du surplus étant réexpédié à travers l'enceinte principale, en même temps que l'huile vers la surface, par la conduite 5.4.

Sur la figure 5 on a représenté une seconde variante d'une installation de séparation selon l'invention, dans laquelle la séparation eau / huile n'est pas assurée par la cloison 5.6, mais par la séparation gravitaire naturelle créée par la différence de densité entre eau et huile. L'eau 1.4 se trouve dans la partie basse 3.4 de l'enceinte principale où se rassemblent aussi les dépôts de sable, alors que l'huile 1.3 se situe en partie supérieure 3.5, et le gaz en ciel de l'enceinte. Sur cette figure, l'unité primaire de séparation fluide / gaz 4.1- 4.2, ainsi que la vanne asservie de contrôle de gaz 4.5, n'ont pas été représentées, mais le fonctionnement d'ensemble du dispositif reste identique.

Cette seconde variante présente l'avantage de créer un étage supplémentaire de séparation eau / huile, car s'il reste des particules d'huile dans l'eau en provenance des cyclones, ces particules migreront naturellement vers la couche d'huile par l'effet de la gravité. De même toute trace d'eau dans le pétrole aura la possibilité de migrer vers le bas pour rejoindre la zone aqueuse. Cependant, il est nécessaire que l'huile présente une densité beaucoup plus faible que l'eau de manière à assurer une séparation correcte entre eau et huile, et donc une interface stable, et cette disposition fonctionne mieux avec des bruts légers.

Sur les figures 2, 4, 5 et 6, on a représenté des moyens de perte de charge 2f consistant en des diaphragmes en aval de l'orifice inférieur 2c de sortie de la phase aqueuse du cyclone de séparation liquide / liquide 2 selon l'invention.

Ce type de moyen de perte de charge engendre une perte de charge proportionnelle au niveau de l'accélération, donc au carré du débit du fluide le traversant, ce qui a l'effet l'autorégulation de l'installation lorsque, comme explicité ci-après, on cherche à réduire la pression de la phase aqueuse en sortie dudit séparateur de type cyclone, pour stabiliser le fonctionnement de l'installation de séparation.

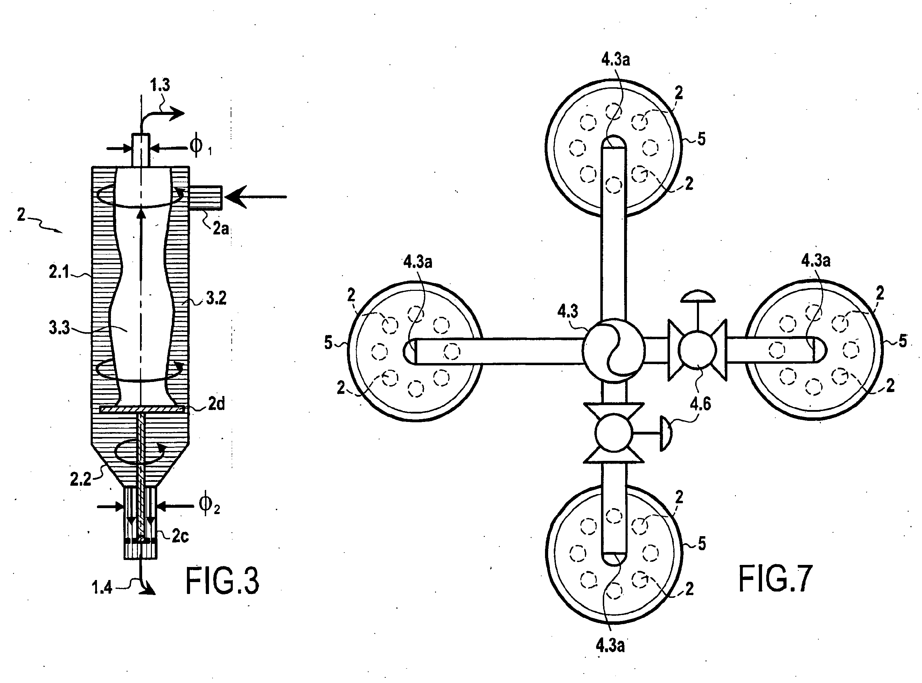

Sur la figure 3 on a représenté en coupe et en vue de côté un cyclone selon l'invention dont l'évacuation en partie basse est axiale. La partie inférieure 2.2 du cyclone est alors conique avec un angle au sommet de 30 à 60°, le plateau 2d n'étant alors plus supporté par le fond du cyclone, mais au niveau de la conduite d'évacuation axiale de l'orifice inférieur axial 2c, dans une zone où l'effet tourbillonnaire n'est plus nécessaire au processus de séparation cyclonique. Le diamètre ϕ2 de la conduite d'évacuation de l'eau au niveau de l'orifice inférieur 2c est supérieur, par exemple de 50%, au diamètre ϕ1 de la conduite d'évacuation du pétrole de l'orifice de sortie axial supérieur 2b, la différence de diamètre correspondant à la perte de charge créée par des plaques perforées ou les diaphragmes 2f décrits ci-dessus et dont le rôle est de rendre le dispositif autorégulateur. La forme conique 2.2 du fond de la chambre 2 permet d'entraîner le sable en même temps que l'eau évacuée.

Dans le cyclone selon l'invention, la pression de la phase lourde (eau), extraite près de la paroi externe de la chambre 2, est supérieure à la pression de sortie de la phase légère (huile). L'écart entre ces deux pressions est directement lié à l'accélération moyenne du fluide interne au cyclone et à la position radiale de l'interface huile / eau au niveau de la plaque inférieure comme représenté sur la figure 2E.

Dans le procédé de séparation selon l'invention, pour stabiliser le fonctionnement de l'installation, on impose une pression de référence sensiblement identique pour les deux orifices de sortie supérieur 2b et inférieur 2c du cyclone, en les reliant à une enceinte de rejet commune constituée par l'enceinte principale 5, et en réduisant la pression de l'eau en aval dudit orifice inférieur 2c de manière à ce qu'elle soit rendue sensiblement identique à celle de l'huile en sortie de l'orifice supérieur axial 2b. On rend l'installation autorégulée en imposant sur la sortie de la phase lourde (eau) une perte de charge proportionnelle au niveau d'accélération, donc au carré de son débit, par exemple au moyen d'une plaque perforée ou d'un diaphragme 2f intercalé à chacun des orifices de sortie inférieurs de chacun des cyclone, lesdits moyens créant des pertes de charges identiques pour l'ensemble des cyclones du dispositif, ou bien en réalisant en pied de cyclone une portion de chambre dans laquelle la rotation résiduelle de sortie est conservée, la sortie finale s'effectuant sur un rayon proche de l'axe, comme représenté sur la figure 3.

L'installation selon l'invention composée d'un ensemble de cyclones selon l'invention associé à une enceinte principale 5 selon les figures 4 à 6 présente donc un caractère d'autorégulation.

Ainsi, les variations de pourcentage eau /pétrole brut entrant, correspondent, dans la configuration de la figure 5, à un déplacement de la surface libre 3.6 de la phase liquide légère (huile), entre des positions limites mini-maxi acceptables, et dans la configuration de la figure 4, à une différence de niveau entre l'interface eau / gaz 3.7 et l'interface pétrole / gaz 3.8. Les variations de débit n'affectent que faiblement la position de l'interface 3.6 dans le cas de la figure 5, et la différence de niveau 3.7-3.8 dans le cas de la figure 4.

Le dispositif de l'enceinte principale décrit précédemment en relation avec des cyclones selon l'invention fonctionne aussi avec des cyclones conventionnel, mais ces derniers sont en général très longs et donc plus difficiles à intégrer au sein d'une enceinte principale, et de plus, leur point de fonctionnement stable est assez précis, ce qui les rend inutilisables lorsque les variations de proportions eau/huile ou de débit sont importantes, en raison des risques d'entraînement de poches d'huile comme expliqué en regard de la figure 1E, alors que les cyclones selon l'invention s'accommodent parfaitement de telles instabilités dans les variations de débit et de proportions huile/eau dans le pétrole brut.

Le fonctionnement du dispositif selon l'invention est donc auto adaptatif, car les cyclones présentent une large plage de fonctionnement, ce qui les rend capables d'absorber des variations importantes dans les pourcentages d'eau et de gaz, lesdites variations étant ensuite stabilisées dans l'enceinte principale 5 où règne une pression créée par le gaz en provenance du séparateur pétrole/ gaz situé en amont, avant d'être dirigé vers d'autres équipements de traitement.

De plus ladite large plage de fonctionnement des cyclones et de l'enceinte principale permet d'envisager un équipement unique pendant toute la durée d'exploitation d'un champ pétrolier, exploitation qui peut durer 20-25 ans voire plus, sans qu'il soit nécessaire de changer les composants sensibles, comme c'est le cas avec l'art antérieur, alors qu'en début d'exploitation un champ produit environ 5% d'eau pour 95% d'huile, alors qu'en fin de vie il produira 95-98% d'eau pour 5-2% d'huile.

Sur la figure 6 on a représenté en coupe et en vue de côté, une installation de séparation selon l'invention correspondant à la seconde variante, dans laquelle la batterie de cyclones 2 est intégrée au sein de l'enceinte principale 5. En effet, pour que l'ensemble des cyclones 2, montés en parallèle fonctionne de manière stable les uns par rapport aux autres, évitant ainsi de créer des instabilités d'ensemble, il est important que les parcours des fluides soient identiques et aussi réduits que possible, de manière à ce que les pertes de charge soient quasi identiques pour chacun des cyclones. Pour ce faire, l'ensemble des cyclones, par exemple 6, 8 ou 12 cyclones, est installé à l'intérieur d'un diffuseur 4.3a relié à la conduite d'alimentation en pétrole brut dégazé 4.3, lesdits cyclones étant assemblés de manière étanche, par exemple par soudage, en 4.3b en partie haute dudit cyclone, et en 4.3c en partie basse dudit cyclone, de telle manière que le diffuseur 4.3a ne communique pas directement avec l'enceinte principale 5, mais communique avec les seules conduites d'entrée tangentielle 2a des cyclones 2. Les orifices axiaux supérieurs 2b de chacun des cyclones communiquent directement avec la partie supérieure de l'enceinte principale, dans la zone où se rassemble naturellement le pétrole séparé de l'eau par simple gravité.

De même, les orifices inférieurs 2c de chacun des cyclones communiquent directement avec la partie inférieure de l'enceinte principale, de préférence directement dans la zone d'accumulation de l'eau.

Le fonctionnement d'ensemble est alors identique à celui décrit en regard des figures 4 et 5.

De manière à pouvoir intervenir sur les éléments internes, dans le cas d'enceinte sphérique, ladite enceinte est avantageusement réalisée en deux demi coquilles soudées respectivement sur des brides 5a assemblées en 5b par boulons, non représentés, l'étanchéité étant assurée par un joint torique 5c.

Dans les descriptions de l'invention, pour la clarté des dessins, on a représenté les cyclones avec orifice unique d'admission 2a, mais on injecte avantageusement le fluide à séparer, par 2, 3 ou 4, voire plus, orifices identiques, uniformément répartis sur la périphérie, comme représenté sur la figure 6A, de manière à augmenter la stabilité du tourbillon créé en tête du cyclone, stabilité qui se répercute alors sur toute la colonne de séparation eau / huile et améliore d'autant la stabilité d'ensemble du dispositif.

Sur la figure 7 on a représenté, en vue de dessus, la mise en parallèle de quatre dispositifs selon la figure 6, les quatre enceintes principales 5 étant reliées au niveau de leur diffuseur 4.3a, à la conduite d'alimentation en pétrole brut dégazé 4.3 par des conduites secondaires identiques créant ainsi une symétrie absolue en termes de trajet du fluide entrant, donc en termes, de pertes de charges. De même, les orifices d'évacuation, non représentés, présenteront la même symétrie, ce qui permettra ainsi un fonctionnement stable du dispositif selon l'invention, quel que soit le nombre de cyclones au sein d'une même enceinte principale, et quel que soit le nombre d'enceintes identiques reliées entre elles de manière totalement symétrique. On ajoute avantageusement des vannes d'isolation 4.6, de préférence du type à boisseau sphérique, qui permettent d'isoler une ou deux enceintes 5, en fonction du débit d'eau et de la proportion eau/huile dans le pétrole brut, ce qui augmente d'autant la souplesse de fonctionnement du dispositif pendant toute la durée de vie des installations, c'est-à-dire 20-30 ans, voire plus, sans avoir à modifier l'ensemble, alors que la production de pétrole brut contient au fil du temps en général de plus en plus d'eau et de moins en moins de pétrole. Ces vannes, représentées sur la figure 7 sur deux enceintes principales adjacentes, seront de préférence installées sur deux enceintes principales en face à face, de manière à respecter au mieux la symétrie du système.

On reste dans l'esprit de l'invention en considérant un dispositif selon la première variante, c'est-à-dire avec la cloison interne 5.6, dans lequel on intègre l'ensemble des cyclones à l'intérieur de l'enceinte principale comme décrit dans la figure 6, mais placés horizontaux. Les orifices de sortie supérieurs 2b des cyclones doivent alors être dirigés sur la partie droite, dans la zone huile, tandis que les orifices inférieurs 2c doivent être dirigés vers la gauche, dans la zone eau de l'enceinte principale, ce qui crée toutefois des dissymétries dans les circuits hydrauliques des cyclones et donc des risques d'instabilité d'ensemble, et ne constitue pas en conséquence la version préférée de l'invention.

A titre d'exemple, un cyclone selon l'invention présente un diamètre de 50 à 70mm et une longueur de corps de 300 à 400mm. Les orifices d'entrée 2a du pétrole brut sont au nombre de trois et présentent, au niveau du raccordement avec le corps cylindrique du cyclone, une section rectangulaire de 20mm de hauteur et de 1mm de largeur. Ce cyclone est capable de traiter un débit d'environ 1 à 1.5 litre/seconde, et crée une perte de charge de 2 à 3 bars entre l'orifice d'entrée 2a et les orifices de sortie 2b, 2c.

Pour une production de 10 000 barils par jour, soit 1590 m3/jour, soit encore 18,4 litres/sec, on installe 16 cyclones selon l'invention dans une enceinte sphérique de 1.5m de diamètre interne constituée de deux demi sphères comme détaillé sur la figure 5, ce qui représente un volume total de 1.77m3, ce qui correspond, en considérant un niveau moyen de remplissage de l'enceinte principale de 50%, à un temps moyen de passage des fluides dans ladite enceinte principale, appelé temps de séjour, de 48 sec. On considère alors avantageusement comme constante de temps du système de régulation de l'ensemble 10% du temps de séjour, soit environ 5 secondes, ce qui permet d'utiliser des moyens de régulation très classiques et ainsi ne nécessite pas les moyens de régulation à très hautes performances requis par les dispositifs de l'art antérieur.

La vitesse tangentielle à l'entrée des cyclones est de 19.2 m/sec, ce qui correspond, pour un diamètre interne du cyclone de 60mm, à une accélération centrifuge de 1 250g.

Pour une production sous-marine en mer très profonde, de 8 à 15 000 barils par jour, on utilise avantageusement une enceinte principale unique. Mais, au delà, on préfère disposer une multiplicité d'enceintes 5 en parallèle comme explicité sur la figure 7, car ladite sphère devant résister à l'implosion devra présenter une épaisseur de paroi très importante, ainsi qu'une sphéricité quasiment parfaite, la réalisation de telles pièces de forge usinées étant extrêmement coûteuse lorsque les dimensions augmentent.

Dans le cas où l'on installe le dispositif à terre, on dispose en général de la place nécessaire, et il est alors intéressant de mettre en oeuvre les configurations indépendantes des figures 4 ou 5, en prenant soin de respecter une symétrie dans les circuits hydrauliques entre cyclones et enceinte principale, ce qui peut être obtenu simplement en installant lesdits cyclones autour de ladite enceinte, à distance constante et de préférence dans une répartition uniforme, la conduite 4.3 d'alimentation en pétrole dégazé étant constituée d'un anneau circulaire assurant une alimentation uniforme dans chacun des dits cyclones. Dans cette configuration, l'enceinte peut être cylindrique d'axe vertical, et comporte alors des fonds bombés.

A bord des FPSO, là place est très limitée et il est alors intéressant d'intégrer les cyclones à l'intérieur de l'enceinte principale, ladite enceinte pouvant être elle aussi cylindrique d'axe vertical, avec fonds bombés, intégrant un assemblage avec brides 5a.

Dans le cas où le dispositif est installé au fond de la mer, et plus particulièrement dans les ultra grands fonds, c'est-à-dire par 2000-3000m, voire plus, on préfèrera intégrer les cyclones dans une enceinte principale de forme sphérique, car dans la conception du système, on est amené à considérer que l'ensemble du dispositif peut être intégralement rempli de gaz et relié à la surface, c'est-à-dire que la pression interne est la pression atmosphérique. La pression extérieure, c'est-à-dire environ 10MPa pour 1000m de profondeur, s'appliquant alors intégralement sur l'enceinte principale et tendant à la faire imploser, l'utilisation d'une forme sphérique permet de résister de manière optimale à ladite pression de fond.

Les procédé, cyclone et installation selon l'invention ont été décrits dans le cadre d'une utilisation pour le pétrole, mais restent applicables dans tout processus où l'on veut séparer, de manière efficace et simple, deux phases liquides de densités différentes proches ou éloignées, en particulier dans l'agro-alimentaire, dans la récupération des huiles industrielles, et dans toute application où l'on veut séparer de manière efficace deux liquides de densités proches.

Au cas où l'on souhaite rejeter l'eau de séparation directement dans la mer, il conviendra de respecter les niveaux acceptables de présence d'huile, et l'on installera avantageusement un deuxième dispositif de séparation selon l'invention en sortie d'eau 5.3 pour atteindre le niveau de pureté recherché.

## Revendications

1. Cyclone de séparation liquide/liquide, de deux phases liquides de densités différentes d'un fluide notamment les phases aqueuse et huileuse d'un pétrole brut comprenant :
- une chambre de séparation (2) dont la paroi forme une surface de révolution s'étendant entre
. au moins un orifice d'admission tangentielle (2a) du fluide à séparer et un orifice de sortie axiale supérieure (2b) de la phase liquide de plus basse densité à l'extrémité supérieure de ladite chambre, et
. un orifice de sortie inférieure (2c) de la phase liquide de plus haute densité,
**caractérisé en ce que** ladite chambre de séparation comprend un même corps cylindrique (2.1) s'étendant au moins entre lesdits orifices d'admission (2a) et un plateau (2d) de même axe (XX') que ledit corps cylindrique, de diamètre inférieur à celui dudit corps cylindrique et positionné au dessus dudit orifice de sortie inférieure (2c), de sorte qu'en fonctionnement 2 volumes se créent sous l'effet du fluide à séparer entrant par le(s)dit(s) orifice(s) d'admission tangentielle, comprenant un volume central de phase liquide de plus basse densité, notamment phase huileuse, sous forme d'une colonne centrale sensiblement cylindrique supportée par ledit plateau, et un volume périphérique annulaire de la phase liquide de plus haute densité entourant ladite colonne centrale, permettant l'évacuation de la phase liquide de plus basse densité par ledit orifice de sortie axiale supérieure (2b) et l'évacuation de ladite phase liquide de plus haute densité par ledit orifice de sortie inférieure (2c).

2. Cyclone de séparation selon la revendication 1, **caractérisé en ce que** l'interface entre les 2 dits volumes peut se déplacer radialement sur ledit plateau lorsque la proportion relative des deux phases liquides entrant dans la composition du fluide à séparer varie, sans affecter la séparation des deux dites phases liquides.

3. Cyclone de séparation selon la revendication 1 ou 2, **caractérisé en ce que** ladite chambre de séparation (2) est constituée d'un même corps cylindrique (2.1) s'étendant entre ledit orifice d'admission (2a) et ledit orifice de sortie inférieure (2c), ledit orifice de sortie inférieure (2c) étant un orifice de sortie tangentielle, et ledit plateau (2d) étant positionné à l'extrémité inférieure dudit corps cylindrique juste en amont dudit orifice inférieur de sortie tangentielle.

4. Cyclone selon la revendication 1 ou 2, **caractérisé en ce que** la portion inférieure (2.2) de ladite chambre située entre ledit plateau (2d) et ledit orifice inférieur de sortie (2c) est de forme conique de même axe (XX') que ledit corps cylindrique et ledit orifice inférieur est un orifice de sortie axiale s'étendant dans la direction axiale (XX') dudit corps cylindrique (2.1).

5. Cyclone selon l'une des revendications 1 à 4, **caractérisé en ce qu'**il comprend des moyens de perte de charge (2f) au niveau dudit orifice de sortie inférieur (2c) pour réduire la pression de la phase lourde aqueuse en sortie dudit séparateur, de préférence des moyens de perte de charge proportionnelle à l'accélération du fluide, tels qu'une plaque perforée ou un diaphragme, en aval dudit orifice de sortie inférieur (2c) dudit cyclone de séparation liquide/liquide (2).

6. Cyclone selon l'une des revendications 1 à 5, **caractérisé en ce que** le diamètre dudit plateau est de 1/2 à 98/100 de celui dudit corps cylindrique, de préférence au moins ¾.

7. Installation de séparation d'au moins deux phases liquides de densités différentes d'un fluide contenant aussi du gaz, de préférence au moins l'huile et l'eau d'un pétrole brut (1) comprenant de l'huile (1.3), de l'eau (1.4), des particules de sable (1.5) et du gaz (1.2) comprenant
a) au moins un séparateur liquide/gaz du type cyclone (4.2) de préférence dans au moins une première enceinte (4.1), et
b) au moins un séparateur liquide/liquide du type cyclone (2) selon l'une des revendications 1 à 6 relié au dit séparateur liquide/gaz par une première conduite (4.3) d'amenée de pétrole dégazé, et
c) au moins une enceinte principale (5), ladite enceinte principale étant reliée
- au dit séparateur liquide /gaz (4.2) par une conduite d'amenée de gaz (4.4), le cas échéant depuis la partie haute de ladite première enceinte (4.1) jusqu'à la partie haute de ladite enceinte principale, ladite conduite d'amenée du gaz (4.4) étant équipée d'une vanne (4.5) apte à contrôler la pression du gaz, et
- audit séparateur liquide/liquide de type cyclone (2) par deux conduites (5.1, 5.2) s'étendant depuis les orifices supérieur (2b) et inférieur (2c) de sortie des phases huileuse et aqueuse respectivement jusqu'à déboucher dans deux zones distinctes (3.4, 3.5) de ladite enceinte principale (5),
- ladite enceinte principale comprenant en outre des conduites (5.3, 5.4) d'évacuation de l'eau et l'huile séparément.

8. Installation selon la revendication 7, **caractérisée en ce qu'**elle comprend des moyens de perte de charge (2f) proportionnelle à l'accélération du fluide, de préférence une plaque perforée ou un diaphragme, en aval dudit orifice de sortie inférieur (2c) dudit cyclone de séparation liquide/liquide (2).

9. Installation selon l'une des revendications 7 ou 8, **caractérisée en ce que** ladite enceinte principale (5) comprend respectivement :
. dans une zone d'accumulation de l'huile (3.5), un dispositif de contrôle (8) de l'évacuation de l'huile et/ou dudit gaz dans une même conduite (5.4), et
. dans une zone d'accumulation de l'eau (3.4), un dispositif de contrôle de l'évacuation de l'eau (7) séparée des dites particules solides dans une conduite distincte (5.3) en partie basse de ladite enceinte principale, et un orifice d'évacuation (5.5) des dites particules solides au fond de ladite enceinte principale.

10. Installation selon la revendication 9, **caractérisée en ce que** ledit dispositif de contrôle de l'évacuation de l'eau (7) séparée des dites particules solides est constitué d'une vanne automatique (7.1) commandée par un flotteur (7.2) apte à obturer l'évacuation de l'eau lorsque le niveau de l'eau descend en dessous d'un niveau donné et apte à autoriser l'évacuation de l'eau lorsque le niveau monte au dessus dudit niveau.

11. Installation selon l'une des revendications 9 ou 10, **caractérisée en ce que** ledit dispositif de contrôle de l'évacuation du pétrole et/ou dudit gaz dans une même conduite (5.4) est constitué par un collecteur cylindrique (8.1) relié à ladite conduite d'évacuation du pétrole et/ou du gaz (5.4), ledit collecteur comprenant une paroi cylindrique perforée (8.2) à différents niveaux sur la hauteur dudit collecteur apte à permettre l'évacuation du gaz par les perforations situées au dessus du niveau du pétrole et l'évacuation du pétrole par les perforations situées au dessous du niveau du pétrole.

12. Installation selon l'une des revendications 7 à 11, **caractérisée en ce que** lesdites deux zones distinctes de ladite enceinte principale (5) sont séparées par une cloison interne (5.6) apte à ne laisser communiquer entre les deux zones que ledit gaz.

13. Installation selon l'une des revendications 7 à 11, **caractérisée en ce que** ladite enceinte principale ne comprend pas de cloison interne et lesdites phases huileuse et aqueuse récupérées séparément en sortie des dits séparateurs liquide/liquide (2) sont envoyées dans deux dites zones distinctes de ladite enceinte principale (5) séparées par simple gravité naturelle créée par la différence de densité entre eau et huile.

14. Installation selon l'une des revendications 7 à 13, **caractérisée en ce qu'**elle comprend une série de dits séparateurs liquide/liquide du type cyclone (2) montés en parallèle.

15. Installation selon l'une des revendications 7 à 14, **caractérisée en ce que** le ou lesdits séparateurs liquide/liquide sont placés à l'intérieur de ladite enceinte principale (5), les orifices de sortie des phases huileuse et aqueuse en sortie du ou des dits séparateurs liquide/liquide de type cyclone communiquant respectivement avec lesdites zones distinctes d'accumulation du pétrole et de l'eau dans ladite enceinte principale.

16. Installation selon l'une des revendications 7 à 15, **caractérisée en ce que** ladite enceinte principale (5) est installée à terre ou à bord d'un support flottant, et est de préférence de forme cylindrique à fond bombé.

17. Installation selon l'une des revendications 7 à 15, **caractérisée en ce que** ladite enceinte principale (5) est de forme sphérique et est installée au fond de la mer.

18. Installation selon l'une des revendications 7 à 17, **caractérisée en ce qu'**on met en oeuvre une pluralité, de préférence au moins quatre enceintes principales (5) contenant chacune une pluralité, de préférence au moins quatre dits séparateurs liquide/liquide du type cyclone.

19. Installation selon la revendication 18, **caractérisée en ce que** lesdites enceintes principales et lesdits séparateurs liquide/liquide du type cyclone de l'étape 2) sont répartis symétriquement.

20. Procédé de séparation d'au moins l'huile (1.3) et l'eau (1.4) d'un pétrole brut (1) comprenant aussi du gaz (1.2) et le cas échéant, des particules de sable (1.5) à l'aide d'une installation selon l'une des revendications 7 à 19, **caractérisé en ce qu'**on réalise les étapes successives suivantes dans lesquelles :
1) On réalise le dégazage au moins partiel dudit pétrole brut (1) à l'aide d'un dit séparateur liquide/gaz de préférence du type cyclone (4.2) dans au moins une première enceinte (4.1), et
2) On réalise la séparation de l'eau contenue dans ledit pétrole brut dégazé (1.1) obtenu à l'étape 1), pour obtenir une phase d'huile (1.3) et une phase aqueuse (1.4, 1.5) contenant lesdites particules solides (1.5), à l'aide d'au moins un dit séparateur liquide/liquide du type cyclone (2), et
3) On réalise une étape supplémentaire de stabilisation et régulation du fonctionnement du ou des dits séparateurs liquide/liquide de l'étape 2) en envoyant les flux de gaz (1.2), phase huileuse (1.3) et phase aqueuse (1.4) issus des dits séparateurs des étapes 1) et 2) dans une même dite enceinte principale (5) sensiblement à la même pression pour obtenir un niveau contrôlé (3.6, 3.8) d'huile et d'eau dans ladite enceinte principale,
- ledit flux de gaz (1.2) étant récupéré en partie haute de ladite première enceinte (4.1) et envoyé (4.4) sous pression contrôlée par une vanne (4.5), en partie haute de ladite enceinte principale (5), et
- la pression de ladite phase aqueuse récupérée en sortie (2c) dudit séparateur liquide/liquide (2) étant réduite par des dits moyens de perte de charge (2f) pour obtenir une pression sensiblement identique à celle de ladite phase huileuse en sortie (2b) dudit séparateur liquide/liquide de type cyclone de l'étape 2).

21. Procédé selon la revendication 20, **caractérisé en ce que** les niveaux des phases liquides d'huile et eau dans les deux dites zones distinctes (3.2, 3.4) de ladite enceinte principale (5) sont régulés par lesdits dispositif de contrôle (8) de l'évacuation de l'huile et/ou dudit gaz dans une même conduite (5.4), et dispositif de contrôle de l'évacuation de l'eau (7).

22. Procédé selon la revendication 20 ou 21, **caractérisé en ce que** la commande de ladite vanne (4.5) pour contrôler la pression du gaz en sortie de ladite première enceinte (4.1), se fait en fonction du niveau de pétrole dans ladite première enceinte, lequel niveau est maintenu de préférence sensiblement constant.

## Patentansprüche

1. Zyklon zur Flüssig-Flüssig-Trennung von zwei flüssigen Phasen unterschiedlicher Dichten eines Fluids, insbesondere der wässrigen und der öligen Phase eines Rohöls, umfassend:
- eine Trennkammer (2), deren Wand eine Rotationsfläche bildet, die sich erstreckt zwischen
• wenigstens einer Öffnung zum tangentialen Zuführen (2a) des zu trennenden Fluids und einer oberen axialen Öffnung für den Austritt (2b) der flüssigen Phase mit niedrigerer Dichte am oberen Ende der Kammer, sowie
• einer unteren Öffnung für den Austritt (2c) der flüssigen Phase höherer Dichte,
**dadurch gekennzeichnet, dass** die Trennkammer ein gleiches zylindrisches Gehäuse (2.1) umfasst, das sich wenigstens zwischen den Zuführöffnungen (2a) und einer Platte (2d) mit gleicher Achse (XX') wie das zylindrische Gehäuse, die einen kleineren Durchmesser als das zylindrische Gehäuse aufweist und oberhalb der unteren Austrittsöffnung (2c) angeordnet ist, erstreckt, so dass im Betrieb unter der Wirkung des zu trennenden, über die Öffnung(en) zum tangentialen Zuführen eintretenden Fluids zwei Volumina entstehen, umfassend ein mittleres Volumen der flüssigen Phase mit niedrigerer Dichte, insbesondere öligen Phase, in Form einer im Wesentlichen zylindrischen mittleren Säule, die durch die Platte getragen wird, und ein ringförmiges Umfangsvolumen der flüssigen Phase höherer Dichte, welches die mittlere Säule umgibt, die das Abführen der flüssigen Phase mit niedrigerer Dichte über die obere axiale Austrittsöffnung (2b) und das Abführen der flüssigen Phase mit höherer Dichte über die untere Austrittsöffnung (2c) ermöglichen.

2. Trennzyklon nach Anspruch 1, **dadurch gekennzeichnet, dass**, wenn sich das relative Verhältnis der beiden flüssigen Phasen, welche Bestandteil des zu trennenden Fluids sind, ändert, die Grenzfläche zwischen den beiden Volumina sich auf der Platte radial bewegen kann, ohne die Trennung der beiden flüssigen Phasen zu beeinträchtigen.

3. Trennzyklon nach Anspruch 1 oder 2, **dadurch gekennzeichnet, dass** die Trennkammer (2) von einem gleichen zylindrischen Gehäuse (2.1) gebildet ist, das sich zwischen der Zuführöffnung (2a) und der unteren Austrittsöffnung (2c) erstreckt, wobei die untere Austrittsöffnung (2c) eine Öffnung für den tangentialen Austritt ist und wobei die Platte (2d) am unteren Ende des zylindrischen Gehäuses direkt vor der unteren Öffnung für den tangentialen Austritt positioniert ist.

4. Zyklon nach Anspruch 1 oder 2, **dadurch gekennzeichnet, dass** der untere Abschnitt (2.2) der Kammer, der zwischen der Platte (2d) und der unteren Austrittsöffnung (2c) gelegen ist, eine konische Form mit gleicher Achse (XX') wie das zylindrische Gehäuse aufweist und die untere Öffnung eine axiale Austrittsöffnung ist, die in der axialen Richtung (XX') des zylindrischen Gehäuses (2.1) verläuft.

5. Zyklon nach einem der Ansprüche 1 bis 4, **dadurch gekennzeichnet, dass** er Druckabfallmittel (2f) im Bereich der unteren Austrittsöffnung (2c) umfasst, um den Druck der schweren wässrigen Phase am Ausgang des Abscheiders zu reduzieren, vorzugsweise Mittel für einen Druckabfall proportional zur Beschleunigung des Fluids, wie eine perforierte Platte oder eine Membran, stromabwärts der unteren Austrittsöffnung (2c) des Flüssig-Flüssig-Trennzyklons (2).

6. Zyklon nach einem der Ansprüche 1 bis 5, **dadurch gekennzeichnet, dass** der Durchmesser der Platte ½ bis 98/100 desjenigen des zylindrischen Gehäuses, vorzugsweise wenigstens ¾ beträgt.

7. Anlage zur Trennung von wenigstens zwei flüssigen Phasen unterschiedlicher Dichten eines auch Gas enthaltenden Fluids, vorzugsweise wenigstens Öl und Wasser eines Rohöls (1), das Öl (1.3), Wasser (1.4), Sandpartikel (1.5) und Gas (1.2) enthält, umfassend
a) wenigstens einen Gas-Flüssig-Abscheider vom Typ Zyklon (4.2) vorzugsweise in wenigstens einem ersten Raum (4.1), und
b) wenigstens einen Flüssig-Flüssig-Abscheider vom Typ Zyklon (2) nach einem der Ansprüche 1 bis 6, der durch eine erste Leitung (4.3) zum Zuführen von entgastem Erdöl mit dem Gas-Flüssig-Abscheider verbunden ist, und
c) wenigstens einen Hauptraum (5), wobei der Hauptraum verbunden ist mit
- dem Gas-Flüssig-Abscheider (4.2) über eine Leitung zum Zuführen von Gas (4.4), gegebenenfalls von dem oberen Teil des ersten Raums (4.1) bis zu dem oberen Teil des Hauptraums, wobei die Gaszuführleitung (4.4) mit einem Ventil (4.5) ausgestattet ist, das geeignet ist, den Druck des Gases zu kontrollieren, und
- mit dem Flüssig-Flüssig-Abscheider vom Typ Zyklon (2) über zwei Leitungen (5.1, 5.2), die sich von der oberen Öffnung (2b) und der unteren Öffnung (2c) für den Austritt der öligen bzw. der wässrigen Phase soweit erstrecken, bis sie in zwei getrennte Bereiche (3.4, 3.5) des Hauptraums (5) münden,
- wobei der Hauptraum ferner Leitungen (5.3, 5.4) zum getrennten Abführen des Wassers und des Öls umfasst.

8. Anlage nach Anspruch 7, **dadurch gekennzeichnet, dass** sie Mittel für einen Druckabfall (2f) proportional zur Beschleunigung des Fluids, vorzugsweise eine perforierte Patte oder eine Membran, stromabwärts der unteren Austrittsöffnung (2c) des Flüssig-Flüssig-Trennzyklons (2) umfasst.

9. Anlage nach einem der Ansprüche 7 oder 8, **dadurch gekennzeichnet, dass** der Hauptraum (5) jeweils umfasst:
• in einem Bereich zum Sammeln des Öls (3.5) eine Vorrichtung zum Steuern (8) des Abführens des Öls und/oder des Gases in einer gleichen Leitung (5.4), und
• in einem Bereich zum Sammeln des Wassers (3.4) eine Vorrichtung zum Steuern des Abführens des Wassers (7) getrennt von den festen Partikeln in einer separaten Leitung (5.3) im unteren Teil des Hauptraums, sowie eine Öffnung zum Abführen (5.5) der festen Partikel am Boden des Hauptraums.

10. Anlage nach Anspruch 9, **dadurch gekennzeichnet, dass** die Vorrichtung zum Steuern des Abführens des Wassers (7) getrennt von den festen Partikeln von einem automatischen Ventil (7.1) gebildet ist, das durch einen Schwimmer (7.2) gesteuert wird, welcher geeignet ist, den Ablass des Wassers zu verschließen, wenn der Pegel des Wassers einen vorgegebenen Pegel unterschreitet, und welcher geeignet ist, das Abführen des Wassers zuzulassen, wenn der Pegel den genannten Pegel überschreitet.

11. Anlage nach einem der Ansprüche 9 oder 10, **dadurch gekennzeichnet, dass** die Vorrichtung zum Steuern des Abführens des Erdöls und/oder des Gases in einer gleichen Leitung (5.4) durch einen zylindrischen Sammler (8.1), welcher mit der Leitung zum Abführen des Erdöls und/oder des Gases (5.4) verbunden ist, gebildet ist, wobei der Sammler eine in verschiedenen Bereichen über die Höhe des Sammlers perforierte zylindrische Wand (8.2) umfasst, die geeignet ist, das Abführen des Gases über die oberhalb des Pegels des Erdöls gelegenen Löcher und das Abführen des Erdöls über die unterhalb des Pegels des Erdöls gelegenen Löcher zu ermöglichen.

12. Anlage nach einem der Ansprüche 7 bis 11, **dadurch gekennzeichnet, dass** die beiden getrennten Bereiche des Hauptraums (5) durch eine innere Trennwand (5.6) getrennt sind, die geeignet ist, zwischen den beiden Bereichen lediglich das Gas in Verbindung stehen zu lassen.

13. Anlage nach einem der Ansprüche 7 bis 11, **dadurch gekennzeichnet, dass** der Hauptraum keine innere Trennwand umfasst und die ölige und die wässrige Phase, die am Ausgang der Flüssig-Flüssig-Abscheider (2) getrennt aufgefangen werden, in zwei getrennte Bereiche des Hauptraums (5) geleitet werden, die durch einfache natürliche Schwerkraft, welche durch den Dichteunterschied zwischen Wasser und Öl erzeugt wird, getrennt werden.

14. Anlage nach einem der Ansprüche 7 bis 13, **dadurch gekennzeichnet, dass** sie eine Reihe von parallel geschalteten Flüssig-Flüssig-Abscheidern vom Typ Zyklon (2) umfasst.

15. Anlage nach einem der Ansprüche 7 bis 14, **dadurch gekennzeichnet, dass** der oder die Flüssig-Flüssig-Abscheider innerhalb des Hauptraums (5) angeordnet sind, wobei die Öffnungen für den Austritt der öligen und der wässrigen Phase am Ausgang des oder der Flüssig-Flüssig-Abscheider(s) vom Typ Zyklon mit den getrennten Bereichen zum Sammeln des Erdöls bzw. des Wassers in dem Hauptraum in Verbindung stehen.

16. Anlage nach einem der Ansprüche 7 bis 15, **dadurch gekennzeichnet, dass** der Hauptraum (5) an Land oder an Bord eines schwimmenden Trägers angebracht ist und vorzugsweise eine zylindrische Form mit gewölbtem Boden aufweist.

17. Anlage nach einem der Ansprüche 7 bis 15, **dadurch gekennzeichnet, dass** der Hauptraum (5) eine Kugelform aufweist und am Meeresgrund angebracht ist.

18. Anlage nach einem der Ansprüche 7 bis 17, **dadurch gekennzeichnet, dass** eine Vielzahl, vorzugsweise wenigstens vier Haupträume (5) verwendet werden, die jeweils eine Vielzahl, vorzugsweise wenigstens vier Flüssig-Flüssig-Abscheider vom Typ Zyklon enthalten.

19. Anlage nach Anspruch 18, **dadurch gekennzeichnet, dass** die Haupträume und die Flüssig-Flüssig-Abscheider vom Typ Zyklon des Schrittes 2) symmetrisch verteilt sind.

20. Verfahren zum Trennen von wenigstens dem Öl (1.3) und dem Wasser (1.4) eines Rohöls (1), das auch Gas (1.2) und gegebenenfalls Sandpartikel (1.5) enthält, mit Hilfe einer Anlage nach einem der Ansprüche 7 bis 19, **dadurch gekennzeichnet, dass** die folgenden aufeinanderfolgenden Schritte durchgeführt werden, bei denen:
1) das wenigstens teilweise Entgasen des Rohöls (1) mit Hilfe eines Gas-Flüssig-Abscheiders vorzugsweise vom Typ Zyklon (4.2) in wenigstens einem ersten Raum (4.1) vollzogen wird, und
2) das Abscheiden des Wassers, das in dem bei Schritt 1) erhaltenen entgasten Rohöl (1.1) enthalten ist, für den Erhalt einer Ölphase (1.3) und einer die festen Partikel (1.5) enthaltenden wässrigen Phase (1.4, 1.5), mit Hilfe wenigstens eines Flüssig-Flüssig-Abscheiders vom Typ Zyklon (2) vollzogen wird und
3) ein zusätzlicher Schritt zur Stabilisierung und Regulierung des Betriebs des oder der Flüssig-Flüssig-Abscheider(s) des Schrittes 2) durchgeführt wird, indem der Gasstrom (1.2), die ölige Phase (1.3) und die wässrige Phase (1.4), die aus den Abscheidern der Schritte 1) und 2) stammen, in einen gleichen Hauptraum (5) im Wesentlichen bei gleichem Druck geleitet werden, um einen kontrollierten Öl- und Wasserpegel (3.6, 3.8) in dem Hauptraum zu erhalten,
- wobei der Gasstrom (1.2) im oberen Teil des ersten Raums (4.1) aufgefangen und unter durch ein Ventil (4.5) kontrolliertem Druck in den oberen Teil des Hauptraums (5) geleitet (4.4) wird, und
- wobei der Druck der am Ausgang (2c) des Flüssig-Flüssig-Abscheiders (2) aufgefangenen wässrigen Phase durch Druckabfallmittel (2f) verringert wird, um einen Druck zu erhalten, der im Wesentlichen gleich demjenigen der öligen Phase am Ausgang (2b) des Flüssig-Flüssig-Abscheiders vom Typ Zyklon des Schrittes 2) ist.

21. Verfahren nach Anspruch 20, **dadurch gekennzeichnet, dass** die Pegel der flüssigen Öl- und Wasserphasen in den beiden getrennten Bereichen (3.2, 3.4) des Hauptraums (5) durch die Vorrichtung zum Steuern (8) des Abführens des Öls und/oder des Gases in einer gleichen Leitung (5.4) und die Vorrichtung zum Steuern des Abführens des Wassers (7) reguliert werden.

22. Verfahren nach Anspruch 20 oder 21, **dadurch gekennzeichnet, dass** die Steuerung des Ventils (4.5) zum Kontrollieren des Drucks des Gases am Ausgang des ersten Raums (4.1) in Abhängigkeit von dem Erdölpegel in dem ersten Raum erfolgt, wobei der Pegel vorzugsweise im Wesentlichen konstant gehalten wird.

## Claims

1. A liquid/liquid separation cyclone for separating two liquid phases of different densities in a fluid, in particular aqueous and oil phases in crude oil, the cyclone comprising:
• a separation chamber (2) having a wall that forms a surface of revolution that extends between:
• at least one tangential admission orifice (2a) for the fluid to be separated and a top axial outlet orifice (2b) for the lower density liquid phase at the top end of said chamber; and
• a bottom outlet orifice (2c) for the higher density liquid phase;
the cyclone being **characterized in that** said separation chamber comprises a single cylindrical body (2.1) extending at least between said admission orifices (2a) and a platform (2d) on the same axis (XX') as said cylindrical body, the platform being of diameter smaller than that of said cylindrical body and being positioned over said bottom outlet orifice (2c), such that in operation two volumes are created under the effect of the fluid for separation entering via said tangential admission orifice(s), the volumes comprising a central volume of lower density liquid phase, in particular oil phase, in the form of a substantially cylindrical central column supported by said platform, and an annular peripheral volume of the higher density phase surrounding said central column, enabling the lower density liquid phase to be discharged via said top axial outlet orifice (2b) and said higher density liquid phase to be discharged via said bottom outlet orifice (2c).

2. A separation cyclone according to claim 1, **characterized in that** the interface between said two volumes can move radially on said platform when the relative proportions of the two liquid phases making up the composition of the fluid for separation vary, without affecting the separation of said two liquid phases.

3. A separation cyclone according to claim 1 or claim 2, **characterized in that** said separation chamber (2) is constituted by a single cylindrical body (2.1) extending between said admission orifice (2a) and said bottom outlet orifice (2c), said bottom outlet orifice (2c) being a tangential outlet orifice, and said platform (2d) being positioned at the bottom end of said cylindrical body immediately upstream from said bottom tangential outlet orifice.

4. A separation cyclone according to claim 1 or claim 2, **characterized in that** the bottom portion (2.2) of said chamber situated between said platform (2d) and said bottom outlet orifice (2c) is conical in shape about the same axis (XX') as said cylindrical body, and said bottom orifice is an axial outlet orifice extending in the axial direction (XX') of said cylindrical body (2.1).

5. A separation cyclone according to any one of claims 1 to 4, **characterized in that** it includes head-loss means (2f) at said bottom outlet orifice (2c) for reducing the pressure of the aqueous heavy phase at the outlet from said separator, preferably means for imparting head loss proportional to the acceleration of the fluid, such as a perforated plate or a diaphragm, located downstream from said bottom outlet orifice (2c) of said liquid/liquid separation cyclone (2).

6. A separation cyclone according to any one of claims 1 to 5, **characterized in that** the diameter of said platform lies in the range 1/2 to 98/100 of the diameter of said cylindrical body, and is preferably at least 3/4 thereof.

7. An installation for separating at least two liquid phases of different densities in a fluid that also contains gas, preferably at least oil and water of crude oil (1) comprising oil (1.3), water (1.4), particles of sand (1.5), and gas (1.2), the installation comprising:
a) at least one cyclone type liquid/gas separator (4.2), preferably in at least one first enclosure (4.1);
and
b) at least one cyclone type liquid/liquid separator (2) according to any one of claims 1 to 6 connected to said liquid/gas separator via a first pipe (4.3) for feeding degassed oil; and
c) at least one main enclosure (5), said main enclosure being connected:
• to said liquid/gas separator (4.2) by a gas feed pipe (4.4), where appropriate from the top portion of said first enclosure (4.1) to the high portion of said main enclosure, said gas feed pipe (4.4) being fitted with a valve (4.5) suitable for controlling the pressure of the gas; and
• to said cyclone type liquid/liquid separator (2) by two pipes (5.1, 5.2) extending from the top and bottom outlet orifices (2b, 2c) for the oil and aqueous phases respectively and opening out into two distinct zones (3.4, 3.5) of said main enclosure (5);
• said main enclosure further comprising pipes (5.3, 5.4) for discharging the water and the oil separately.

8. An installation according to claim 7, **characterized in that** it includes head-loss means (2f) suitable for imparting head loss proportional to the acceleration of the fluid, preferably a perforated plate or a diaphragm downstream from said bottom outlet orifice (2c) of said liquid/liquid separation cyclone (2).

9. An installation according to claim 7 or claim 8, **characterized in that** said main enclosure (5) comprises, respectively:
• in an oil accumulation zone (3.5) a device (8) for controlling the discharging of oil and/or said gas via a common pipe (5.4); and
• in a water accumulation zone (3.4), a device (7) for controlling the discharging of water separated from said solid particles via a distinct pipe (5.3) in the bottom portion of said main enclosure, and an orifice (5.5) for discharging said solid particles at the bottom of said main enclosure.

10. An installation according to claim 9, **characterized in that** said device (7) for controlling the discharging of water separated from said solid particles is constituted by an automatic valve (7.1) controlled by a float (7.2) suitable for shutting off water discharge when the level of water drops below a given level, and suitable for allowing water discharge when the level rises above said level.

11. An installation according to claim 9 or claim 10, **characterized in that** said device for controlling the discharging of oil and/or said gas in a common pipe (5.4) is constituted by a cylindrical collector (8.1) connected to said pipe (5.4) for discharging oil and/or gas, said collector comprising a cylindrical wall that is perforated (8.2) at different levels up the height of said collector and suitable for allowing gas to be discharged via the perforations situated above the level of the oil and allowing oil to be discharged via the perforations situated below the level of the oil.

12. An installation according to any one of claims 7 to 11, **characterized in that** said two distinct zones in said main enclosure (5) are separated by an internal partition (5.6) suitable for allowing only said gas to communicate between the two zones.

13. An installation according to any one of claims 7 to 11, **characterized in that** said main enclosure does not include an internal partition and said oil and aqueous phases recovered separately at the outlets from said liquid/liquid separators (2) are delivered into said two distinct two zones of said main enclosure (5) that are separated merely by natural gravity as created by the difference in density between water and oil.

14. An installation according to any one of claims 7 to 13, **characterized in that** it comprises a series of said cyclone type liquid/liquid separators (2) connected in parallel.

15. An installation according to any one of claims 7 to 14, **characterized in that** said liquid/liquid separator(s) is/are placed inside said main enclosure (5), the outlet orifices for the oil and water phases delivered by said cyclone type liquid/liquid separator(s) communicating respectively with said distinct zones for accumulating oil and for accumulating water in said main enclosure.

16. An installation according to any one of claims 7 to 15, **characterized in that** said main enclosure (5) is installed on land or on board a floating support, and is preferably in the form of a cylinder with rounded end walls.

17. An installation according to any one of claims 7 to 15, **characterized in that** said main enclosure (5) is spherical in shape and is installed at the sea bottom.

18. An installation according to any one of claims 7 to 17, **characterized in that** a plurality of main enclosures (5) are implemented, preferably at least four main enclosures, each containing a plurality of said cyclone type liquid/liquid separators, preferably at least four separators.

19. An installation according to claim 18, **characterized in that** said main enclosures and said cyclone type liquid/liquid separators of step 2) are distributed symmetrically.

20. A method of separating at least the oil (1.3) and the water (1.4) of a crude oil (1) that also contains gas (1.2), and possibly particles of sand (1.5), with the help of an installation according to any one of claims 7 to 19, the method being **characterized in that** the following successive steps are performed:
1) at least partially degassing said crude oil (1) with the help of a said liquid/gas separator, preferably of the cyclone type (4.2) in at least a first enclosure (4.1); and
2) separating the water contained in said degassed crude oil (1.1) obtained in step 1) so as to obtain an oil phase (1.3) and an aqueous phase (1.4, 1.5) containing said solid particles (1.5), with the help of at least one cyclone type liquid/liquid separator (2);
and
3) performing an additional step of stabilizing and regulating the operation of said liquid/liquid separator(s) of step 2) by delivering the gas (1.2), oil phase (1.3), and aqueous phase (1.4) streams coming from said separators of steps 1) and 2) into a common said main enclosure (5) at substantially the same pressure in order to obtain controlled levels (3.6, 3.8) of oil and water in said main enclosure:
• said gas flow (1.2) being recovered from the high portion of said first enclosure (4.1) and sent (4.4) under pressure controlled by a valve (4.5) into the high portion of said main enclosure (5); and
• the pressure of said aqueous phase recovered at the outlet (2c) of said liquid/liquid separator (2) being reduced by said head-loss means (2f) to obtain a pressure that is substantially identical to the pressure of said oil phase at the outlet (2b) from said cyclone type liquid/liquid separator step 2).

21. A method according to claim 20, **characterized in that** the levels of the oil and water liquid phases in said two distinct zones (3.2, 3.4) of said main enclosure (5) are regulated by said device (8) for controlling the discharge of oil and/or said gas into a common pipe (5.4), and by said device (7) for controlling the discharge of water.

22. A method according to claim 20 or claim 21, **characterized in that** the control of said valve (4.5) for controlling the pressure of gas at the outlet from said first enclosure (4.1) is performed as a function of the level of oil in said first enclosure, which level is preferably maintained substantially constant.
